## Europäisches Patentamt
## European Patent Office
## Office européen des brevets

(19)

(11) Veröffentlichungsnummer: **0 185 743**
**B1**

(12) **EUROPÄISCHE PATENTSCHRIFT**

(45) Veröffentlichungstag der Patentschrift:
**07.12.88**

(51) Int. Cl.⁴: **F 16 H 55/50,** F 16 H 55/38

(21) Anmeldenummer: **85903210.4**

(22) Anmeldetag: **21.06.85**

(86) Internationale Anmeldenummer:
**PCT/DE 85/00214**

(87) Internationale Veröffentlichungsnummer:
**WO 86/00382 (16.01.86** Gazette 86/2)

(54) **SEILZUG.**

(30) Priorität: **21.06.84 DE 3423230**

(43) Veröffentlichungstag der Anmeldung:
**02.07.86 Patentblatt 86/27**

(45) Bekanntmachung des Hinweises auf die Patenterteilung:
**07.12.88 Patentblatt 88/49**

(84) Benannte Vertragsstaaten:
**AT BE CH FR GB IT LI LU NL SE**

(56) Entgegenhaltungen:
**DE-A- 2 511 890**
**GB-A- 1 441 054**
**US-A- 3 302 932**
**US-A- 3 343 809**

(73) Patentinhaber: **FELGENDREHER, Witold, Spandauer Damm 68, D-1000 Berlin (DE)**

(72) Erfinder: **FELGENDREHER, Witold, Spandauer Damm 68, D-1000 Berlin (DE)**

(74) Vertreter: **Maikowski, Michael, Dipl.-Ing. Dr., Xantener Strasse 10, D-1000 Berlin 15 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Seilzug nach dem Oberbegriff des Patentanspruchs 1.

Ein derartiger Seilzug ist aus der US-PS 33 02 932 bekannt. Bei diesem bekannten Seilzug wird eine Seilscheibe verwendet, bei der die Zähne und damit deren Scheitellinien radial verlaufen. Der Abstand der Scheitellinien und damit der Abstand der Zähne voneinander nimmt vom Umfang der Seilscheibe zur Mitte hin fortschreitend ab. Bei einer anderen in dieser US-PS beschriebenen Ausführungsform der Seilscheibe bilden die Scheitellinien der Zähne Tangenten an einem Kreis, dessen Mittelpunkt der Seilscheibenmittelpunkt ist und dessen Radius kleiner ist als der Radius der Seilscheibe. Die Abstände der Scheitellinien dieser Zähne und damit die Abstände der Zähne nehmen ebenfalls in Richtung radial vom Rand der Seitenscheibe nach innen ab. Bei diesem bekannten Seilzug wird beim Einlaufen des Seiles in die Seilscheibe das Seil durch die Last und bei schrägverlaufenden Zähnen auch durch eine Zwangsführung dieser Zähne radial nach innen bewegt. Dies führt zu einer Verkeilung des Seilumfanges zwischen den ebenfalls V-förmig verlaufenden Scheitellinien der Zähne. Wegen des radial nach innen abnehmenden Abstandes zwischen diesen Scheitellinien findet dabei gleichzeitig eine Pressung des Seiles in Längsrichtung zwischen den Seitenflanken der Zähne statt. Dies führt zu einer Stauchung des Seilmaterials und zu einem erhöhten Reibungseingriff des Seiles. Das Seil hat dadurch die Tendenz, nicht frei oder leicht von der Seilscheibe abzulaufen, sondern zwischen den Zähnen hängenzubleiben. Es sind deshalb bei der bekannten Seilscheibe zungenartige Vorrichtungen vorgesehen, die sich nach aussen in den Nutengrund hineinerstrecken und mit denen das Seil zwangsläufig aus der Verkeilung zwischen den Zahnflanken herausgelöst werden muss.

Aus der GB-A 1 441 054 ist ein Keilriemengetriebe bekannt, dessen Riemenscheiben Flansche aufweisen, die an im Abstand voneinander angeordneten Stellen mit auswechselbaren Einsatzstücken versehen sind, die Kopfabschnitte aufweisen, die in die Nut hineinragen, um einen örtlichen Druck auf einen Keilriemen auszüben, der in dieser Nut läuft. Die Kopfabschnitte können ein Sägezahnprofil aufweisen.

Der Erfindung liegt die Aufgabe zu Grunde, das Herstellen einer Eingriffsverbindung zwischen Seil und Seilscheibe, Einlaufen des Seiles und das Lösen dieser Eingriffsverbindung in der gleichen, einfachen und leichten Weise zu ermöglichen.

Erfindungsgemäss wird diese Aufgabe durch die technische Lehre des Patentanspruchs 1 gelöst.

Die am Umfang der Seilscheibe vorgesehenen Verzahnungseinheiten bilden jeweils eine Funktionseinheit. Die Verzahnungseinheiten und das Seil gelangen im Betrieb schlupffrei miteinander in und ausser Einriff. Dadurch, dass die Scheitellinien der Zähne einer Verzahnungseinheit über ihre gesamte Länge hinweg äquidistant in einem vorbestimmten Abstand verlaufen, kann bei der Bewegung des Seiles radial nach innen eine Stauchung und damit eine Verkeilung zwischen benachbarten Zähnen nicht erfolgen, so dass beim Auslaufen des Seiles keine speziellen Trennmittel erforderlich sind.

Legt man in der Mitte der Verzahnungseinheit am Grund der V-förmigen Ringnut eine Tangente, so sind alle Zähne einer Verzahlungseinheit unter dem gleichen Winkel zu dieser Tangente geneigt. Die Seitenflanken dieser Zähne schneiden sich in einer Scheitellinie, so dass keine flachen Kopfflächen gebildet werden. Die Absände dieser Scheitellinien voneinander sind über die Länge der Zähne gleich.

Durch diese Ausbildung der Verzahnungseinheiten kann ein lose um die Seilscheibe herumgeführtes Seil, wenn auf dieses ein Zug ausgeübt wird, sofort in Eingriff mit diesen Verzahnungseinheiten gelangen. Durch die Flanken der Zähne, die wie Führungsrampen wirken, wird dabei das Seil weiter in die V-förmige Ringnut hineingedrückt, so dass eine formschlüssige Verbindung und damit Kraftübertragung entsteht. Wird die Zugeinwirkung auf das Seil beendet, so drückt die Verzahnung bei sich weiterdrehender Seilscheibe das Seil selbständig aus dieser Verkeilung heraus, so dass sich der Eingriff zwischen Seil und Seilscheibe von selbst löst. Wenn umgekehrt die angetriebene Seilscheibe ein loses, um diese herumgeführtes Seil erfasst, so wird das Seil durch die Verzahnungseinheiten in einen formschlüssigen Eingriff mit der Seilscheibe gezogen. Sobald jedoch die Krafteinwirkung aufhört, kann sich das Seil in einfachster Weise lösen.

Für den Eingriff zwischen Seil und Seilscheibe und für das leichte Lösen ist es vorteilhaft, dass die Zähne in die V-förmige Ringnut so hineinspringen, dass unmittelbar vor und hinter den Zähnen einer Verzahnungseinheit keine Flächen vorhanden sind, die auf das Seil eine Keilwirkung ausüben können.

Der Abstand zwischen den einzelnen Verzahnungseinheiten hängt vom Seilscheibendurchmesser und vom Seildurchmesser ab. Der Abstand wird mit Vorteil immer derart bemessen, dass ein Seil ohne Störung durch eine vor- oder nachlaufende Verzahnungseinheit von einer dazwischenliegenden Verzahnungseinheit erfasst wird und sich aus dieser wieder lösen kann.

Bei dieser Gestaltung bilden die Scheitellinien der Zähne Verkeilungskanten und die Seitenflanken der Zähne bilden Führungsrampen, die das Seil je nach Kraftwirkungsrichtung verkeilen oder aus einer Verkeilung herauslösen. Besondere Vorkehrungen zum Herauslösen des Seiles aus einer Verkeilung sind nicht erforderlich. Weiterhin ist es nicht erforderlich, dass das Seil straff um die Seilscheibe herumgeführt wird. Das Seil kann mit einer beliebigen vorbestimmten Lose, aber auch verhältnismässig straff, geführt werden.

Mit Vorteil können die Längen der Scheitellinien der Zähne einer Verzahnungseinheit gleich sein. Von besonderem Vorteil ist es jedoch, dass die Länge des an einem Ende der Verzahnungseinheit liegenden Zahnes kürzer ist als bei den anderen. Bei diesem am Ende liegenden Zahn handelt es sich mit Vorteil um denjenigen, der beim Erfassen des Seiles zur Kraftübertragung als erster mit dem Seil in Eingriff gelangen kann. Hierdurch wird an der Verzahnungseinheit an der Stelle, an der das Seil zuerst erfasst wird, eine maulförmige Eintrittsöffnung für das Seil gebildet.

Bei einer besonders einfach herzustellenden und dennoch wirksamen Ausführungsform können beispielsweise die Scheitellinien der Zähne parallele Geraden sein.

Um die Eingriffs- und Löseverhältnisse zwischen Verzahnungseinheit und Seil bei einem Ausführungsbeispiel an bestimmte Anforderungen anzupassen, können die Zähne in Umfangsrichtung gekrümmt sein.

Bei einem anderen Ausführungsbeispiel ist die Höhe der Zähne konstant. Die Scheitellinien verlaufen dabei parallel zu den Seitenflanken der V-förmigen Ringnut.

Zur Erzielung vorbestimmter Verkeilungen zwischen dem Seil und der Verzahnungseinheit kann die Höhe der Zähne nach aussen, d.h. vom Seilscheibenmittelpunkt aus gesehen radial nach aussen, abnehmen. In allen Fällen kann ferner zur Erleichterung des Eingriffs zwischen Verzahnungseinheit und Seil an den äusseren Enden der Zähne eine Abrundung vorgesehen sein.

In manchen Fällen können die Scheitellinien in axialer Richtung gekrümmt sein, d.h. dass die Höhenabnahme der Zähne von innen nach aussen gemäss einer Kurvenfunktion erfolgt.

Bei einer Ausführungsform liegen die Scheitellinien der Zähne auf gemeinsamen Ebenen, deren Schnittlinien mit dem Grund der V-förmigen Ringnut unter einem Winkel im Bereich von etwa 30 min bis 8° divergieren. Es hat sich gezeigt, dass bei dieser Ausführungsform das Seil über seine Länge hinweg von einer grösseren Zähnezahl gleichförmiger erfasst wird. Dadurch wird die Eingriffkraft der Verzahnungseinheiten mit dem Seil und infolgedessen die Leistungsübertragung zwischen Seil und Seilscheibe verbessert. Ein Schlupf wird ausgeschaltet. In vorteilhafter Weise wird auch noch die zwischen Seil und Seilscheibe übertragene Last auf eine grössere Seilstrecke verteilt, so dass eine sehr grosse Schonung des Seiles ermöglicht wird. Besonders günstige Ergebnisse werden erzielt, wenn dieser Divergenzwinkel zwischen 1° und 4° und insbesondere zwischen 2° und 3° liegt.

Die gemeinsamen Ebenen, auf denen die Scheitellinien der Zähne liegen, können auch zusätzlich noch in radialer Richtung divergieren und zwar unter einem Divergenzwinkel von 5° bis 40°. Dieser Divergenzwinkel wird dem Verwendungszweck des Seilzuges, dem Material des Seiles und dessen Durchmesser entsprechend gewählt.

Wenn die Scheitellinien bei besonderen Ausführungsformen in axialer Richtung von innen nach aussen gekrümmt sind, so können diese Scheitellinien auf Flächen höherer Ordnung liegen, die ebenfalls in Umfangsrichtung und nach aussen divergieren. Dabei sind diese Flächen in vorbestimmter Weise sowohl in axialer Richtung als auch in Umfangsrichtung gekrümmt. Diese Flächen beschreiben sowohl in Umfangsrichtung als auch radial nach aussen eine Trompetenform, d.h. die Schnittlinien dieser Flächen mit zum Scheibenmittelpunkt konzentrischen Zylindern öffnen sich trompentenförmig. Die Öffnungsweite steigt dabei radial nach aussen an.

Wenn man in der Mitte der Verzahnungseinheit an die Seilscheibe im Grund der V-förmigen Ringnut eine Tangente anlegt, so sind bei bevorzugten Ausführungsformen die Scheitellinien der Zähne unter einem Winkel im Bereich von 20° bis zu 60° gegenüber dieser Tangente geneigt. Dieser Neigungswinkel hängt weitgehend vom Verwendungszweck des Seilzuges ab. Allgemein kann gesagt werden, dass je kleiner der Winkel ist um so stärker erfolgt das Eingreifen des Seiles. Als besonders vorteilhaft für viele Verwendungszwecke hat sich der Winkelbereich von 40° bis 50° ergeben. Insbesondere kann es vorteilhaft sein, einen Winkel von 45° zu wählen.

Wenn die Zähne aller Verzahnungseinheiten der Seilscheibe in der gleichen Richtung geneigt sind, kann vom Seil eine Kraft auf die Seilscheibe nur in einer Richtung, und von der Seilscheibe auf das Seil nur in der entgegengesetzten Richtung übertragen werden. Eine derartige Ausführungsform ist immer dann vorteilhaft, wenn bei einem Seilzug Freilaufeigenschaften erwünscht sind.

Für viele Verwendungszwecke kann es jedoch vorteilhaft sein, den Seilzug so auszubilden, dass zwischen Seil und Seilscheibe in beiden Richtungen Kräfte übertragen werden können. Beispielsweise kann es erforderlich sein, auf beide Trumme des um die Seilscheibe herumgeführten Seiles Kräfte auszuüben, um die Seilscheibe in beiden Richtungen zu drehen oder auf beide Trumme, je nach Drehrichtung der Seilscheibe, Zugkräfte auszuüben.

Zu diesem Zweck können mit Vorteil die Zähne wenigstens einer Verzahnungseinheit entgegengesetzt zu den Zähnen der anderen Verzahnungseinheiten geneigt sein. Ein besseres Eingriffsverhalten ergibt sich, wenn gemäss einer besonders bevorzugten Ausführungsform die Zähne der in Umfangsrichtung aufeinanderfolgenden Verzahnungseinheiten entgegengesetzt geneigt sind. Je nach Zug- bzw. Drehrichtung greifen die einen oder die anderen Verzahnungseinheiten ein. Die Verzahnungseinheiten mit entgegengesetzt gerichteten Zähnen geben dann jeweils das Seil frei.

Bei all diesen Ausführungsformen kann das Seil lose um die Seilscheibe herumgeführt werden. Es ist nicht erforderlich, das Seil zu spannen, obwohl diese Möglichkeit auch besteht. Bei der Kraftübertragung erfasst beispielsweise das Seil beim geringsten Zug sofort die nächstliegende Verzahnungseinheit und gelangt mit dieser in Eingriff. Umgekehrt wird bei der Übertragung einer Kraft von der Seilscheibe auf das Seil das Seil von der ersten Verzahnungseinheit erfasst und wie eine Kette von einem Kettenzahnrad mitgeführt. An den Stellen, an denen das Seil austreten soll, löst sich das Seil selbständig aus den Verzahnungseinheiten, ohne das hierfür besondere Vorkehrungen getroffen werden müssen.

Bei einem Ausführungsbeispiel ist die Anzahl der Verzahnungseinheiten eine gerade Zahl. Dabei sind dann die Zähne der Verzahnungseinheiten jeweils paarweise gegeneinander versetzt. Dies führt zu einem symmetrischen Aufbau, der ein abgeglichenes Arbeiten des Seilzuges ermöglicht.

Da der Eingriff zwischen Seilscheibe und Seil nach Art des Eingriffes zwischen Kettenrad und Kette bei einem Kettenradantrieb erfolgt, ist es nicht erforderlich, dass die V-förmige Ringnut vollständig, um die Seilscheibe herum umlaufend, ausgebildet ist. Die Seitenflanken der V-förmigen Ringnut erstrecken sich bei einer Ausführungsform lediglich über den Umfangsabschnitt, den eine Verzahnungseinheit einnimmt. Hierdurch wird einerseits Material eingespart, andererseits kann bei dieser Ausführungsform ein etwaiges Einklemmen des Seiles zwischen den Verzahnungseinheiten nicht mehr auftreten. Die Anordnung und Ausbildung der Verzahnungseinheiten sorgt dann für die richtige Führung des Seiles um die Seilscheibe herum. Bei dieser Ausführungsform weist die Seilscheibe im Bereich der Verzahnungseinheiten Vorsprünge auf, so dass sie in der Seitenansicht eine gewisse Ähnlichkeit mit einem Kettenrad hat.

Bei einer anderen Ausführungsform kann der Grund der V-förmigen Ringnut aus Sekantenabschnitten bestehen. Dies bedeutet, dass in den entsprechenden Bereichen der Grund der V-förmigen Ringnut geradlinig verläuft. Insbesondere kann dabei der Scheibenumfang ein n-Eck sein, an dessen Seiten Verzahnungseinheiten angeordnet sind. Hierbei laufen die Seitenflanken der V-förmigen Ringnut nicht um, so dass sich eine Seilscheibe ergibt, deren Seitenansicht der eines Sternrades ähnlich ist.

Dieser Seilzug arbeitet wie ein Kettenradantrieb, ohne dass es erforderlich ist, im Seil selbst verdickte oder vorspringende Stellen vorzusehen, die mit einer entsprechend geformten Ringnut in der Seilscheibe zusammenarbeiten. Trotz der hervorragenden Eingriffseigenschaften kann das Seil eine völlig glatte Oberfläche haben, so dass beispielsweise das Seil ohne jegliche Verletzungsgefahr mit der Hand ergriffen und betätigt werden kann. Dies ist für sehr viele Anwendungsfälle von ausserordentlich grosser Bedeutung.

Bei einem weiteren Ausführungsbeispiel ist die Seilscheibe an einem Befestigungszapfen drehbar gelagert. An einer Stirnfläche dieser Seilscheibe ist dann eine Montageplatte befestigt, die ihrerseits eine Montagehalterung trägt. An der anderen Stirnseite ist dann ein Drehring drehbar gelagert. Der Umfang dieses Drehringes trägt drei Seilführungszapfen, die sich über die Umfangsbreite der Seilscheibe erstrecken. Bei dieser Ausführungsform der Seilscheibe ist das Seil mit Vorteil ein Endlosseil, das radial ausserhalb des mittleren Seilführungszapfen überkreuzt ist. Zwischen diesem mittleren Seilführungszapfen läuft das Seil auf der Seilscheibe. Das Endlosseil ist dann mindestens über zwei ortsfeste Seilführungen geführt, deren Abstand voneinander, senkrecht zur Seilscheibenmittellinie, grösser ist als der Durchmesser des Drehrings.

Diese Ausführungsform des Seilzuges kann für eine Fockrolleinrichtung bei einem Segelboot verwendet werden. Der Seilführungszapfen, an dem die Seilscheibe drehbar gelagert ist, ist dann verschwenkbar am Bootsdeck befestigt und die Montageplatte nimmt das untere Ende des Vorstages auf. Der Drehring (Belegautomatik) mit den Führungszapfen, durch die das Endlosseil (Rolleine) über kreuz geführt wird, belegt selbsttätig das Endlosseil nach dem Rollvorgang und arretiert damit die Fockroll in jeder gewünschten Stellung automatisch. Wenn das Endlosseil (Rolleine) losgelassen wird, so wird dieses vom Winddruck am Segel über die Seilscheibe zurückgezogen und dabei von der Belegautomatik erfasst, die das Endlosseil bis zur Belegstellung strafft. Diese Belegstellung wird selbsttätig durch die spezielle Führung des Endlosseiles durch die Seilführungszapfen am Drehring erzeugt.

Der erfindungsgemässe Seilzug kann ebenfalls zur Betätigung eines Hebezeuges verwendet werden. Bei einem Hebezeug kann auch, falls dies aus Sicherheitsgründen gewünscht ist, mit einem Endlosseil und der im vorstehenden beschriebenen Belegautomatik gearbeitet werden. Dabei würde, wenn beim Anheben einer Last das Seil losgelassen wird, das Hebezeug derartig selbsttätig ohne Klinkengesperre so belegt, dass die Last nicht herunterfallen kann.

Es ist aber auch möglich, den Seilzug bei einem Fahrrad zu verwenden, um den Antrieb von den Pedalen auf das Hinterrad zu übertragen. Eine ölige Kette ist nicht mehr erforderlich. In einfachster Weise eird ein Freilaufbetrieb ermöglicht. Insbesondere vorteilhaft ist die Verwendung dieses Seilzuges bei einem Kinderfahrrad. Das Auflegen des Seiles ist so problemlos, dass auch Kinder dies bewerkstelligen können.

Ausführungsbeispiele der Erfindung sollen in der folgenden Beschreibung unter Bezugnahme auf die Fig. der Zeichnung erläutert werden.

Es zeigen:

Fig. 1 eine schematische Darstellung des Seilzuges mit einer Schnittdarstellung der Seilscheibe genommen längs der Linie I-I der Fig. 2,

Fig. 2 eine schematische Seitenansicht des Seilzuges mit teilweise fortgelassenem Seil,

Fig. 3 eine Schnittansicht eines Ausschnittes der Seilscheibe genommen längs der Linie III-III der Fig. 4,

Fig. 4 eine Radialansicht eines Seilscheibenabschnittes,

Fig. 5 eine schematische Draufsicht auf einen Umfangsabschintt der Seilscheibe,

Fig. 6 eine ähnliche Schnittansicht der Seilscheibe wie Fig. 1 mit Verzahnungseinheiten mit entgegengesetzt geneigten Zähnen,

Fig. 7 eine Schnittansicht einer weiteren Ausführungsform des Seilzuges mit einer Schnittdarstellung der Seilscheibe genommen längs der Li-

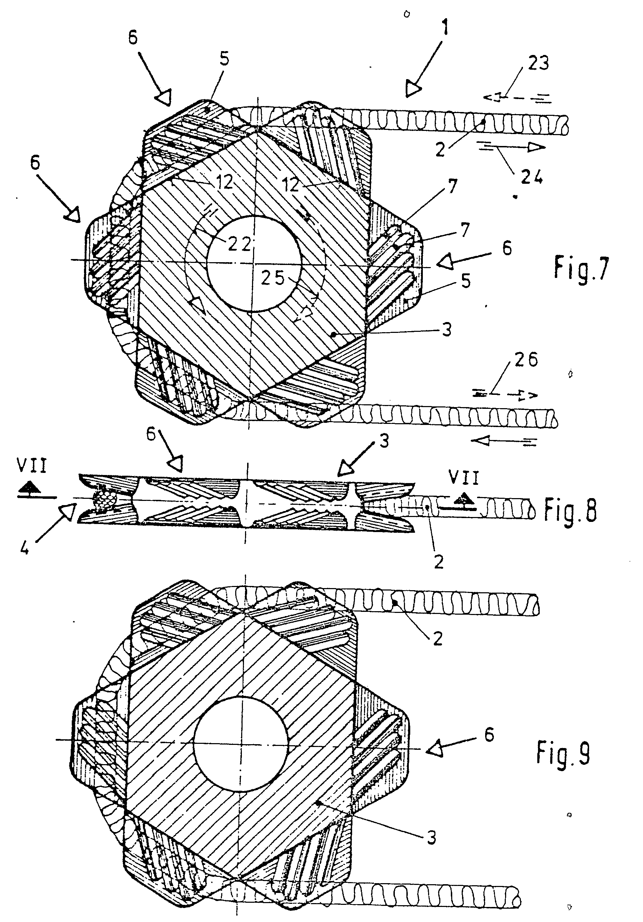

nie VII-VII der Fig. 8,

Fig. 8 eine Seitenansicht des in Fig. 7 gezeigten Seilzuges mit teilweise geschnittenem Seil,

Fig. 9 eine ähnliche Darstellung des Seilzuges wie in Fig. 7 gezeigt mit einer Seilscheibe mit Verzahnungseinheiten mit entgegengesetzt geneigten Zähnen,

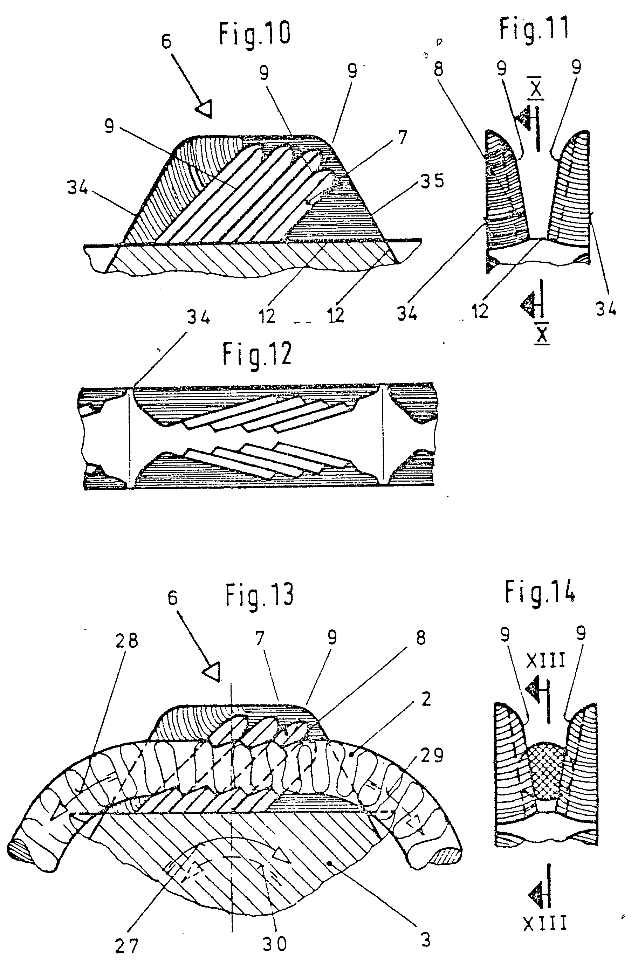

Fig. 10 eine Schnittansicht der in Fig. 7 gezeigten Seilscheibe genommen längs der Linie X-X der Fig. 11,

Fig 11 eine Radialansicht der in Fig. 10 dargestellten Verzahnungseinheit,

Fig. 12 eine Draufsicht auf die in Fig. 10 dargestellte Verzahnungseinheit,

Fig. 13 eine Schnittansicht genommen längs der Linie XIII-XIII der Fig. 14, die den Eingriff einer Verzahnungseinheit mit einem Seil veranschaulicht,

Fig. 14 eine Radialschnittansicht der in Fig. 13 gezeigten Verzahnungseinheit,

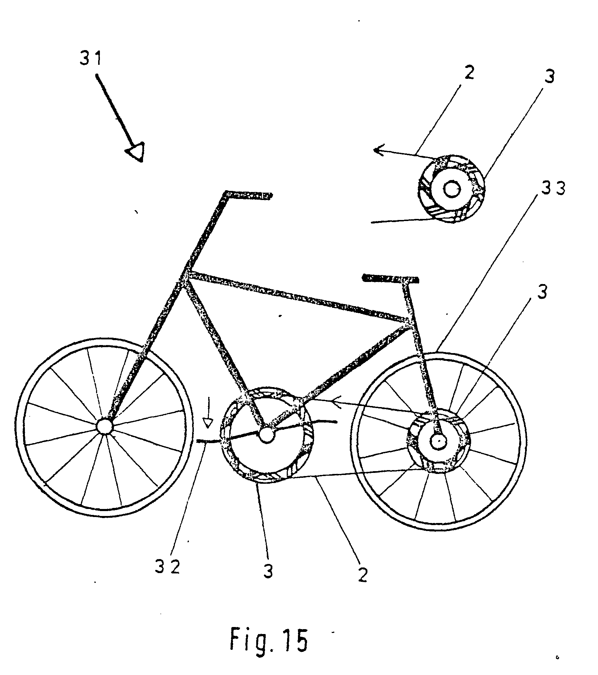

Fig. 15 eine schematische Darstellugn der Verwendung des Seilzuges bei einem Fahrrad,

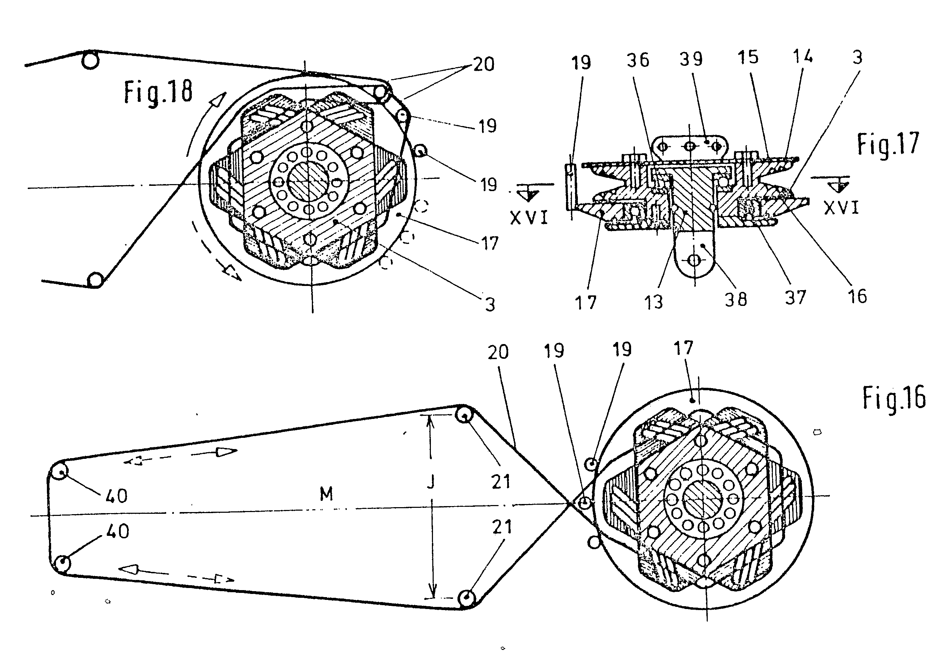

Fig. 16 eine Draufsicht auf eine spezielle Ausführungsform des Seilzuges, wobei die Seilscheibe längs der Linie XVI-XVI der Fig, 17 geschnitten,

Fig. 17 eine Axialschnittansicht der in Fig. 16 gezeigten Seilscheibe

und

Fig. 18 den in Fig. 16 dargestellten Seilzug in der automatischen Beleg- oder Selbsthemmstellung.

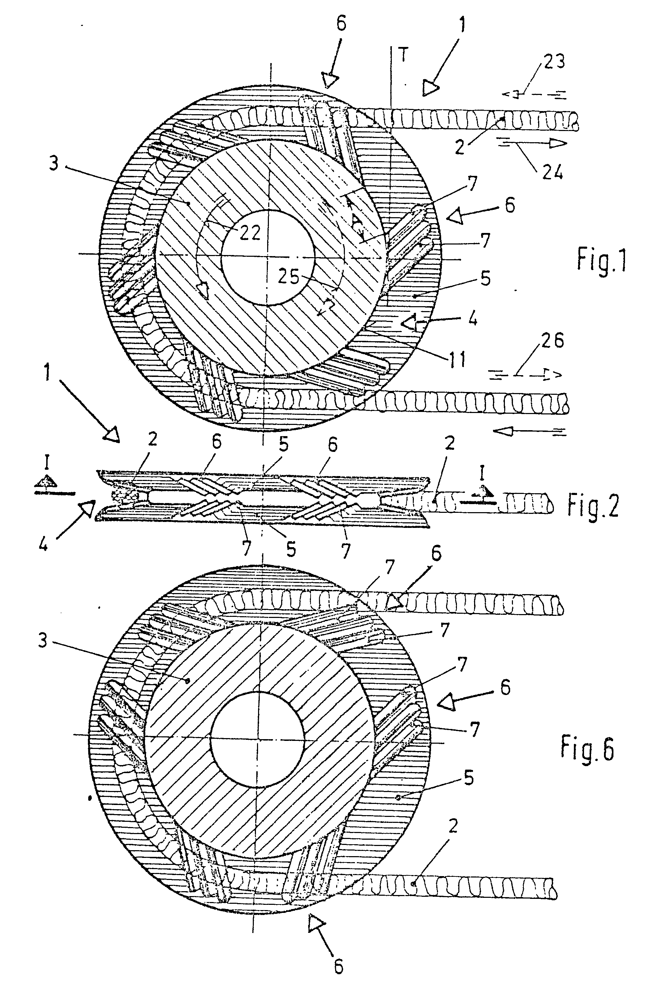

In Fig. 1 ist ein Ende eines Seilzuges 1 dargestellt. Das Seil 2 dieses Seilzuges 1 ist um die Seilscheibe 3 herumgeführt und läuft dabei in einer V-förmigen Ringnut 4, die Seitenflanken aufweist.

Am Umfang dieser Seilscheibe 3 sind voneinander getrennte Verzahnungseinheiten 6 angeordnet, die mehrere nebeneinanderliegende Zähne 7 aufweisen. Die Verzahnungseinheiten 6 haben einen Abstand A voneinander.

Wie Fig. 1 zeigt, haben die Zähne 7 alle die gleiche Neigung gegenüber einer in der Mitte der Verzahnungseinheit 6 an den Grund 11 der V-förmigen Ringnut 4 gelegten Tangente T. Bei dargestellten Ausführungsbeispiel sind diese Zähne entgegengesetzt zum Uhrzeigerdrehsinn geneigt.

Wie der Fig. 2 zu entnehmen ist, springen die Zähne 7 von den Seitenflanken 5 der V-förmigen Ringnut 4 in das Ringnutinnere vor. Zwischen den Verzahnungseinheiten 6 treten die Seitenflanken 5 zurück.

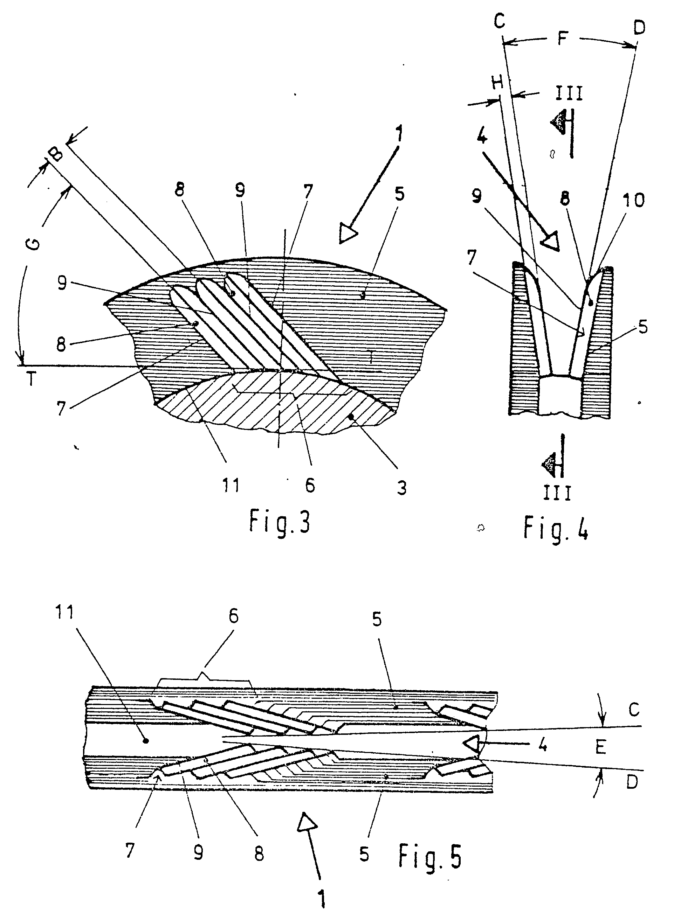

Wie deutlich den Fig. 3 und 4 zu entnehmen ist, schneiden sich die Flanken 8 der einzelnen Zähne 7 in einer Scheitellinie 9. Zweckmässigerweise ist diese Scheitellinie 9 nicht schneidenförmig ausgebildet sondern abgerundet, Die Verzahnungseinheiten 6 sind derart aufgebaut, dass die Abstände B zwischen benachbarten Zähnen 7 gleich ist. Der gleiche Abstand ist auch in der gesamten Verzahnungseinheit 6 vorhanden.

Die Längen der Scheitellinien 9 der Zähne 7 können gleich sein, so dass sich die Zähne 7 vom V-förmigen Ringnutengrund 11 gleich weit nach aussen erstrecken. Es ist jedoch auch möglich, dass ein Zahn 7 am Anfang der Verzahnungseinheit 7 kürzer ist, wie es in den Fig. 10 und 13 dargestellt ist.

Insbesondere können die Scheitellinien 9, wie deutlich in den Fig. 3 und 5 gezeigt, parallele Geraden sein. In bestimmten Fällen ist es aber auch möglich, dass diese Scheitellinien 9 in Umfangsrichtung gekrümmt sind. Bei der Darstellung in Fig. 3 können beispielsweise bei der dargestellten Neigung der Zähne 7 diese Scheitellinien 9 eine Krümmung nach links aufweisen. Hierdurch ändert sich das Eingriffsverhalten der Zähne mit dem Seil.

In Fig. 4 ist die Höhe H der Zähne 7 dargestellt. Diese Höhe H ist der Abstand der Scheitellinien 9 von der Seitenflanke 5 der V-förmigen Ringnut 4. Diese Höhe H kann, wie Fig. 4 zeigt, über die Längserstreckung der Zähne 7 im wesentlichen konstant sein. Es ist aber auch in bestimmten Fällen möglich, dass diese Höhe H der Zähne 7 von innen nach aussen, also vom Grund 11 der V-förmigen Ringnut 4 nach aussen abnimmt. In beiden Fällen können die Zähne 7 sowohl in der Draufsicht als auch im Querschnitt, wie den Fig. 3 und 4 zu entnehmen ist, abgerundet sein. In Fig. 4 ist eine Abrundung 10 im Querschnitt dargestellt. Die Abrundungen 10 im Grundriss sind deutlich in den Fig. 1 und 3 zu erkennen.

Bei einer weiteren Ausführungsform kann die in Fig. 4 im Querschnitt dargestellte Scheitellinie 9 von innen nach aussen, d.h. radial gekrümmt sein. Eine derartige Ausgestaltung dient einer Anpassung an bestimmte Seile oder einer Einstellung gewünschter Eingriffs- und Löseverhältnisse.

Wenn die Scheitellinien 9 gerade Linien sind, so können diese Scheitellinien 9 auf gemeinsamen Ebenen liegen. Diese Ebenen sind in den Fig. 4 und 5 mit C und D bezeichnet. Wie die Fig. 5 zeigt, können diese Ebenen C, D in Umfangsrichtung unter einem Winkel E divergieren. Dieser Winkel kann in einem Winkelbereich von 30 min bis zu 8° liegen. Als besonders vorteilhaft hat sich für den Winkel E ein Bereich zwischen 1° und 4° erwiesen, wobei besonders gute Ergebnisse innerhalb eines Bereiches zwischen 2° und 3° erzielt wurden. Die Wahl dieses Divergenzwinkels dient ebenfalls zur Anpassung an gegebene Betriebsbedingungen.

Wie die Fig. 4 zeigt, können diese Ebenen C, D vom Grund 11 der V-förmigen Ringnut 4 nach aussen unter einem Winkel F divergieren. Dieser Winkel liegt innerhalb eines Bereiches von 5° bis zu 40°.

Wenn die Scheitellinien 9 bei der Darstellung in Fig. 4 nicht gerade Linien sondern gekrümmte Linien sind, so können diese Scheitellinien 9 jeweils in einer gemeinsamen Fläche höherer Ordnung liegen. Diese Flächen können dann ihrerseits sowohl in Umfangsrichtung als auch in axialer Richtung gekrümmt sein, so dass sie sich sowohl in Umfangsrichtung als auch in radialer Richtung trompetenförmig öffnen. Schnittlinien dieser gekrümmten Flächen mit um die Seilscheibe herumgelegten Zylinderabschnitten mit unterschiedlichen Radien ergeben dann trompentenförmig gekrümmte Liniepaare, deren Trompetenöffnung mit zunehmenden Radius dieser Zylinder zunimmt.

In Fig. 3 ist der Neigungswinkel G zwischen den Scheitellinien 9 und einer Tangente T gezeigt, die an den Grund 11 der V-förmigen Ringnut 4 in der Mitte der Verzahnungseinheit 6 angelegt ist. Dieser Winkel liegt im allgemeinen in einem Bereich von 20° bis 60°. Gute Ergebnisse wurden in einem Bereich von 40° bis 50° erzielt und es hat sich als zweckmässiger Wert ein Winkel von etwa 45° erwiesen. Es sei bemerkt, dass je kleiner dieser Winkel G ist um so schärfer ist der Eingriff zwischen Verzahnungseinheit und Seil.

Wie Fig. 1 zeigt, ist das Seil 2 um die Seilscheibe 3 herumgeführt. Das Seil 2 liegt dabei am Aussenrand der V-förmigen Ringnut 4. In Fig. 1 ist der Zustand dargestellt, in dem ein Eingriff zwischen Seil 2 und Verzahnungseinheiten 6 erfolgt ist.

Es soll zunächst der Fall betrachtet werden, dass ein in Richtung des Pfeiles 22 wirkendes Drehmoment der Seilscheibe 3 auf das Seil 2 übertragen werden soll. Dabei wird im Seil 2 ein Zug in Richtung des Pfeiles 23 erzeugt. Sobald sich die Seilscheibe 3 in Richtung des Pfeiles 22 zu drehen beginnt, erfasst eine oder erfassen mehrere Verzahnungseinheiten 6 das Seil 2. Das Seil 2 wird dabei bei der Darstellung in Fig. 3 zuerst von dem linken, schrägverlaufenden Zahn 7 erfasst. Dadurch wird das Seil 2 in den in Fig. 4 dargestellten Keil hineingezogen, der durch die beiden gegenüberliegenden Scheitellinien 9 der spiegelbildlich angeordneten Zähne 7 erzeugt wird. Die vorderen Flanken 8 dienen dabei als Aufgleitflächen. Durch den schrägen Verlauf der Scheitellinie 9 gegenüber der Tangente T wird bei diesem Eingriff das Seil 2 zwangsläufig nach innen zum Grund 11 der V-förmigen Ringnut 4 hineingezogen. Dabei wird das Seil 2 fortlaufend von weiteren Zähnen 7 erfasst, so dass der Eingriff verstärkt wird. Es wird auch die Kraft verstärkt, mit der das Seil 2 von einer Verzahnungseinheit 6 zum Grund 11 der V-förmigen Ringnut 4 hin gezogen wird. Das Seil 2 wird fortlaufend zwischen die hintereinander geordneten Keile gezogen, die durch die gegenüberliegenden Scheitellinien 9 aufeinanderfolgender Zahnpaare gebildet werden. Auch bei den nachfolgenden Zähnen bilden die vorderen Flanken 8 Auflauframpen. Dabei wird ein Teil des Seilumfanges zwischen die Flanken 8 aufeinanderfolgender Zähne 7 hineingedrückt. Die hierbei auftretende Deformation führt zu einem formschlüssigen Eingriff zwischen der Verzahnungseinheit 6 und dem Seil 2. Dies ist schematisch auch in Fig. 13 dargestellt.

Dieser formschlüssige Eingriff führt zu der besonderen Funktionsweise der Verzahnungseinheit 6. Die Verzahnungseinheit 6 greift insgesamt in das Seil 2 in der Weise ein, wie der Zahn eines Kettenrades in eine Kette eingreift. Auf diese beschriebene Weise wird das Seil 2 beim Einlaufen in die Seilscheibe 3 von aufeinanderfolgenden Verzahnungseinheiten 6 aufgenommen und von diesem zwangsläufig mitgenommen. Diese Mitnahme erfolgt bis zu der Stelle, an der das Seil 2 von der Seilscheibe 3 abläuft. Durch die Neigung der Zähne 7 und durch die rampenartige Wirkung sowohl der Scheitellinien 9 als auch der Flanken 8 der Zähne 7 wird an dieser Stelle das Seil 2 zwangsläufig vom Grund 11 der V-förmigen Ringnut 4 fort nach aussen gedrückt. Das Seil 2 kommt ohne zusätzliche Hilfsmassnahmen selbsttätig von der Verzahnungseinheit 6 an der Auslaufstelle frei.

In umgekehrter Weise kann der gleiche Effekt erzielt werden. Wenn auf das Seil 2 in Richtung des Pfeiles 24 ein Zug ausgeübt wird, so wird auf die Seilscheibe 3 ein in Richtung des Pfeiles 25 wirkendes Drehmoment übertragen. Es ist leicht einzusehen, dass das in Richtung des Pfeiles 24 zubelastete Seil 2 in einer der vorstehend beschriebenen Weise entsprechende Weise durch die Zugkraft in die Verzahnungseinheiten 6 hineingezogen wird. Dabei gleitet in Folge der Zugkraft das Seil 2 zwischen den Scheitellinien 9 und den Flanken 8 einander gegenüberliegender Zähne 7 zum Grund 11 der V-förmigen Ringnut 4 hin. Hierdurch erfolgt wieder eine entsprechende Verkeilung zwischen den einander gegenüberliegenden Scheitellinien 9. Eine Deformation zwischen den Flanken 8 findet ebenfalls statt, so dass wiederum ein formschlüssiger Eingriff zwischen Seil 2 und Verzahnungseinheit 6 vorhanden ist. An der Auslaufstelle kann sich dann das Seil 2 durch die entgegengesetzte Rampenwirkung der Scheitellinien 9 und der Flanken 8 vom Grund 11 der V-förmigen Ringnut 4 fortbewegen und wird dadurch aus der Verkeilung zwischen einander gegenüberliegenden Scheitellinien 9 und Flanken 8 der Zähne 7 zwangsläufig gelöst.

Wird bei der Darstellung in Fig. 1 in Richtung des Pfeiles 26 ein Zug auf das Seil 2 ausgeübt, so kann kein Drehmoment auf die Seilscheibe 3 übertragen werden. Das Seil 2 kann nicht in einen formschlüssigen, kraftübertragenden Eingriff mit den Verzahnungseinheiten gelangen, da durch die Ausrichtung der Zähne das Seil 2 nicht längs der Scheitellinien 9 und Flanken 8 zum Grund 11 der V-förmigen Ringnut 4 hingleiten kann.

Demzufolge tritt keine Verkeilung zwischen einander gegenüberliegenden Scheitellinien 9 und Flanken 8 auf. Das Seil 2 wird vielmehr bei einer Berührung mit einer Verzahnungseinheit 6 nach aussen zum äusseren Umfang der V-förmigen Ringnut 4 hingeführt. Das Seil 2 kann demzufolge frei um die Seilscheibe 3 herumgleiten, falls diese festgehalten wird. Es findet dabei ein Freilaufbetrieb statt.

Es ist oft erwünscht, nicht nur eine Kraftübertragung im Seilzug 1 in einer Richtung durchführen zu können. Um in beiden Richtungen, sowohl vom Seil 2 auf die Seilscheibe 3 als auch von der Seilscheibe 3 auf das Seil 2, eine Kraft übertragen zu können, müssen am Umfang der Seilscheibe 3, wie in Fig. 6 dargestellt, Verzahnungseinheiten 6 vorgesehen sein, deren Zähne 7 entgegengesetzt geneigt sind. Es ist leicht einzusehen, dass bei jeder Drehrichtung der Seilscheibe 3 das Seil 2 mitgenommen wird und bei jeder Zugrichtung im Seil 2 die Seilscheibe 3 zwangsläufig gedreht wird.

In den Fig. 7 bis 9, die im wesentlichen den Fig. 1, 2 und 6 entsprechen, ist ein weiteres Ausführungsbeispiel der Erfindung dargestellt. Zunächst einmal ist festzustellen, dass die Seitenflanken 5 der V-förmigen Ringnut 4 zwischen den einzelnen Verzahnungseinheiten 6 unterbrochen sind. Eine derartige Ausbildung kann auch bei den in den Fig. 1 und 6 dargestellten Ausführungsformen vorgesehen sein. Die Seitenflanken 5 erstrecken sich lediglich über den Umfangsbereich der Verzahnungseinheiten 6. Dadurch wird sichergestellt, dass zwischen den Verzahnungseinheiten 6 sich keinerlei Flächen mehr befinden, die auf das Seil 2 eine unerwünschte Keilwirkung ausüben könnten. Bei dieser Ausführungsform wird eine Umfangskonfiguration der Seilscheibe 3 erzielt, die eine grosse Ähnlichkeit mit einem Zahn- oder Kettenrad hat.

Bei der in den Fig. 7 bis 9 dargestellten Ausführungsform ist der Grund 11 der V-förmigen Ringnut 4 nicht mehr rund, sondern besteht aus aufeinanderfolgenden Sekantenabschnitten 12. Im Grundriss bildet der Umfang der in den Fig. 7 und 9 dargestellten Seilscheibe 3 allgemein ein n-Eck, dargestellt ist ein Sechseck. Die Sekantenabschnitte 12 dieses Sechsecks tragen je eine Verzahnungseinheit 6. Bei der Darstellung in Fig. 7 handelt es sich um ein Äquivalent zu der in Fig. 1 dargestellten Seilscheibe 3 und die in Verbindung mit Fig. 1 beschriebenen Funktionsweisen sind auch mit der in Fig. 7 dargestellten Ausführungsform erzielbar.

Aus Fig. 8 ist deutlich zu erkennen, dass die Verzahnungseinheiten 6 nach innen vorspringende Einheiten sind. Ferner ist zu erkennen, dass die Räume vor und hinter diesen Einheiten, in Umfangsrichtung gesehen, frei sind, so dass zwischen diesen Verzahnungseinheiten 6 das Seil 2 seitlich nicht eingezwängt werden kann. Dies ist auch bei den Ausführungsformen der Fall, die in den Fig. 1, 2 und 6 gezeigt sind, wenn die Seitenflanken 5 sich nicht über den gesamten Umfang erstrecken. Das Seil 2 kann bei dieser Ausführungsform voll ergriffen werden und kann hindernisfrei sich wieder lösen.

Die in den Fig. 7 und 8 dargestellte Ausführungsform ermöglicht einen Betrieb lediglich in einer Richtung. Es kann ein Freilauf erfolgen.

Die in Fig. 9 dargestellte Sechskant-Seilscheibe 3 entspricht in ihrer Funktionsweise der in Fig. 6 dargestellten Seilscheibe.

In den Fig. 7 bis 9 ist noch eine abgeänderte Ausführungsform der Verzahnungseinheiten 6 gezeigt. Diese Ausgestaltung der Verzahnungseinheiten 6 kann selbstverständlich auch bei den in den Fig. 1, 2 und 6 dargestellten Ausführungsformen verwendet werden. Bei den dargestellten Verzahnungseinheiten 6 weist jeweils der erste oder vorn liegende Zahn 7 eine kleinere Länge auf als der nächstfolgende Zahn 7. Wenn sich diese beiden Zähne 7 dem Seil 2 nähern so gelangt das Seil 2 gleichzeitig mit zwei Zähnen 7 in Eingriff.

Diese beiden Zähne 7 bilden eine maulförmige Öffnung der angreifenden Verzahnungseinheit 7 und es erfolgt ein gleichzeitiges Hineinziehen des Seiles 2 in den V-förmigen Ringnut 4 zwischen den Seitenflanken 5 entlang hintereinanderliegender Flanken 8 und Scheitellinien 9. Auf diese Weise wird das Erfassen des Seiles 2 bzw. umgekehrt der Eingriff des Seiles 2 in die Verzahnungseinheit 6 erleichtert und verbessert.

Bei den in den Fig. 7, 8 und 9 dargestellten Ausführungsformen können die Seilscheiben 3 ganzteilig ausgebildet sein. Es ist aber auch möglich, die N-kantförmigen Kerne der Seilscheiben 3 getrennt zu fertigen und dann getrennt hergestellte Verzahnungseinheiten 6 aufzusetzen.

Die Fig. 13 und 14 veranschaulichen nochmals die Eingriffswirkung zwischen dem Seil 2 und der Verzahnungseinheit 6. Wird auf das Seil 2 in Richtung des Pfeiles 28 ein Zug ausgeübt, so wird die Seilscheibe 3 in Richtung des Pfeiles 30 gedreht. Es ist der Seilabschnitt dargestellt, der in die Zähne 7 der Verzahnungseinheit 6 hineingezogen ist. Dieser Seilabschnitt ist etwas deformiert und Umfangsteile dieses Seilabschnittes greifen, wie Fig. 14 zeigt, hinter die Scheitellinien 9 und bilden mit den Flanken 8 eine formschlüssige Verbindung. Wird auf das Seil 2 in Richtung des Pfeiles 29 dann ein Zug ausgeübt, so wird das Seil zwangsläufig aus dem Keileingriff mit der Verzahnungseinheit 6 gelöst, da das Seil 2 längs der Scheitellinie 9 und der Flanken 8 nach aussen gleiten muss. Wenn die Seilscheibe 3 feststeht, so kann das Seil 2 dann frei um den Umfang der Seilscheibe herumlaufen. Es findet Freilaufbetrieb statt. Wird die in Fig. 13 dargestellte Seilscheibe 3 in Richtung des Pfeiles 30 gedreht, so erfolgt keine Mitnahme des Seiles 2, denn wie zu erkennen, wird das Seil 2 durch die Rampenwirkung der Flanken 8 und der Scheitellinien 9 nach aussen gedrückt. Die Seilscheibe 3 kann sich frei im Seil 2 drehen.

Die Fig. 10, 11 und 12 zeigen konstruktive Einzelheiten der in den Fig. 7, 8 und 9 dargestellten Ausführungsbeispiele.

Aus diesen Fig. ist zu erkennen, dass ein Zahn 7 an einem Ende der Verzahnungseinheit 6 kürzer ist als die übrigen Zähne 7. Für den Eingriff mit dem Seil 2 wird dadurch zwischen der Scheitellinie 9 dieses Zahnes 7 und der Scheitellinie 9 des nachfolgenden Zahnes 7 eine maulförmige Öffnung gebildet. Es ist ferner zu erkennen, dass in der Verzahnungseinheit 6 der Bereich, der vor dem rechts liegenden ersten Zahn 7 liegt und sich zur Kante 35 erstreckt, nach aussen abgeflacht ist. Weiterhin geht die Flanke 8 des links liegenden Zahnes 7 gewölbt in die Kante 34 über. Dies ist besonders aus Fig. 11 zu entnehmen, die eine Ansicht der in Fig. 10 dargestellten Verzahnungseinheit 6, von links gesehen, ist.

In Fig. 15 ist ein Fahrrad 31 dargestellt, bei dem der erfindungsgemässe Seilzug zur Übertragung einer Antriebskraft von Pedalen 32 auf das Hinterrad 33 verwendet wird.

Das als Endlosseil ausgebildete Seil 2 ist einmal über die mit den Pedalen 32 in Antriebsverbindung stehende Seilscheibe 3 geführt. Die Seilscheibe 3 ist, wie in Fig. 6 gezeigt, ausgebildet. Mit dem Hinterrad ist eine Seilscheibe 3 verbunden, die ebenfalls, wie in Fig. 6 gezeigt, ausgebildet ist. Mit dieser Ausführung der beiden Seilscheiben 3 nach Fig. 6, die das Endlosseil 20 in beiden Drehrichtungen greifen, ist ein Rücktritt am Fahrrad gewährleistet. Bei starrer Achse am Hinterrad 33 kann ein Fahrzeug auch rückwärts bewegt werden. Oberhalb des Fahrrades 31 ist für das Hinterrad 33 eine Seilscheibe 3 gezeigt, die, wie die in Fig. 1 dargestellte Seilscheibe 3, ausgebildet ist und das Endlosseil 20 nur in einer Drehrichtung greift. Die über dem Fahrrad 31 dargestellte Seilscheibe 3 für das Hinterrad 33 ermöglicht, bei starrer Achse am Hinterrad 33, einen Freilaufbetrieb. Bei dem dargestellten Seilzug wird nur eine Antriebskraft in Richtung des in das Seil 2 eingezeigten Pfeiles übertragen. Bei stehenden Pedalen 32 kann das Fahrrad 31 ausrollen und dies bei fester Achse am Hinterrad 33, die die Seilscheibe 3 mitnimmt.

Die Fig. 16 bis 18 zeigen eine weitere Ausführungsform des erfindungsgemässen Seilzuges 1, die einem speziellen Verwendungszweck zugeführt werden kann.

Wie Fig. 17 zeigt, ist die Seilscheibe 3 mittels Kugellagern 36 an einem Befestigungszapfen 13 drehbar gelagert. Dieser Befestigungszapfen 13 trägt am unteren Ende eine Gabel 38. Mit Hilfe dieser Gabel 38 kann dieser Befestigungszapfen 13 beispielsweise verschwenkbar an einem Bootsdeck befestigt werden.

An einer Stirnfläche 14 der Seilscheibe 3 ist eine Montageplatte 15 befestigt. Diese Montageplatte 15 trägt eine Halterung 39, an der beispielsweise das Vorstag eines Segelbootes befestigt werden kann. An der anderen Stirnseite 16 der Seilscheibe 3 ist mittels eines Kugellagers 37 ein Drehring 17 drehbar gelagert. Am Umfang dieses Drehringes 17 sind drei Seilführungszapfen 19 befestigt. Diese Seilführungszapfen 19 weisen einen geringen Winkelabstand voneinander auf und erstrecken sich in axialer Richtung über die Umfangsbreite der Seilscheibe 3 hinweg.

Wie Fig. 16 zeigt, ist um die in Fig. 17 dargestellte Seilscheibe 3 ein Endlosseil 20 herumgeführt. Dieses Seil ist ausserhalb des mittleren Seilführungszapfen 19 gekreuzt und verläuft zwischen diesem und den benachbarten beiden Führungszapfen dann auf die Seilscheibe 3. Dieses Endlosseil 20 ist zunächst über zwei Seilführungen 21 geführt. Diese beiden Seilführungen 21 haben senkrecht zur Seilscheibenmittellinie M gemessen einen Abstand I voneinander, der grösser ist als der Durchmesser des Drehringes 17. Das Endlosseil 20 ist dann noch über zwei Führungen 40 geführt.

Wenn dieser Seilzug 1 als Fockroller bei einem Segelboot verwendet wird, kann mit diesem Seilzug 1 die Fock im Einhandbetrieb ein- und ausgerollt sowie vergrössert und verkleinert werden, da das Endlosseil 20 den Rollvorgang selbsttätig durch die Belegautomatik (Drehring 17 mit Seilführungszapfen 19 wie in Fig. 18 dargestellt) die Fockrolle blockiert und dabei bei jeder Segelgrösse und jedem Winddruck die Seilscheibe 3 festhält.

Das Endlosseil 20 wird zwischen den Seilführungen 21 und 40 über steuerbord und backbord geführt. Mit einer Hand kann zum Aus- und Einrollen sowie reffen der Fock das Endlosseil 20 sowohl auf der Steuerbordseite als auch auf der Backbordseite in Richtung der eingezeichneten Pfeile betätigt werden. Wurde die Fock durch Zug an dem Endlosseil 20 in der einen oder anderen Richtung ein- oder ausgerollt, so wird beim Loslassen des Endlosseiles 20 dieses vom Winddruck am Segel über die Seilscheibe 3 zurückgedreht und von der Belegautomatik (Drehring 17 mit Seilführungszapfen 19) beispielsweise in die in Fig. 18 dargestellte Belegstellung gebracht. In dieser Belegstellung wird eine Weiterdrehung durch den Winddruck durch die Seilführungszapfen 19 am Drehring 17 verhindert, um die sich dann das Endlosseil 20, wie dargestellt, herumgelegt hat. Durch einen Zug, egal aus welcher Richtung, kann diese Belegung in einfachster Weise wieder gelöst werden, wobei gleichzeitig ein neuer Rollvorgang eingeleitet wird. Abhängig von der Rollrichtung belegt sich das Endlosseil 20 wie in Fig. 18 dargestellt oder spiegelbildlich.

## Patentansprüche

1. Seilzug, der auf eine Seilscheibe (3) den Zug eines Seiles (2) als Drehmoment und/oder deren Drehmoment als Zug auf das Seil (2) überträgt, und dessen Seilscheibe (3) in am Umfang ausgebildeten V-förmigen Seitenflanken (5) spiegelbildlich angeordnete, – in der Scheibenrotationsebene betrachtet – gegenüber den Radiallinien schräg geneigte und von den Seitenflanken vorspringende Zähne (7) aufweist, deren Flanken (8) sich in einer Scheitellinie (9) schneiden, dadurch gekennzeichnet, dass am Umfang der Seilscheibe (3) mehrere Verzahnungseinheiten (6) im Abstand (A) voneinander angeordnet sind, dass jede Verzahnungseinheit (6) mehrere Zähne (7) aufweist, deren Scheitellinien (9) über ihre gesamte Länge hinweg äquidistant im Abstand (B) verlaufen.

2. Seilzug nach Anspruch 1, dadurch gekennzeichnet, dass die Länge der Scheitellinie (9) der Zähne (7) an mindestens einem Ende der Verzahnungseinheit (6) kürzer ist als die beiden anderen.

3. Seilzug nach Anspruch 1 oder 2, dadurch gekennzeichnet, dass die Scheitellinie (9) der Zähne (7) zur Tangente am Grund (11) der V-förmigen Ringnut in der Mitte der Verzahnungseinheit (6) unter einem Winkel (G) von 40°–50° geneigt sind.

4. Seilzug nach einem der Ansprüche 1–3, dadurch gekennzeichnet, dass die Scheitellinien (9) der Zähne (7) in Umfangsrichtung gekrümmt sind.

5. Seilzug nach einem der Ansprüche 1–4, dadurch gekennzeichnet, dass die Höhe (H) der Zähne (7) nach aussen abnimmt.

6. Seilzug nach einem der Ansprüche 1–5, dadurch gekennzeichnet, dass die Scheitellinien (9) der Zähne (7) auf gemeinsamen Ebenen (C, D) liegen, deren Schnittlinien mit dem Grund (11) der V-förmigen Ringnut (4) unter einem Winkel (E) von 30 min bis 8° divergieren.

7. Seilzug nach Anspruch 6, dadurch gekennzeichnet, dass die Ebenen (C, D) in radialer Richtung unter einem Winkel (F) von 5° bis 40° divergieren.

8. Seilzug nach Anspruch 5, dadurch gekennzeichnet, dass die Flächen, in denen die Scheitellinien (9) liegen in radialer und in Umfangsrichtung gekrümmt sind.

9. Seilzug nach einem der Ansprüche 1–8, dadurch gekennzeichnet, dass die Zähne (7) der in Umfangsrichtung aufeinanderfolgenden Verzahnungseinheiten (6) entgegengesetzt geneigt sind.

## Revendications

1. Dispositif d'entraînement funiculaire qui transmet la traction d'un câble (2) à titre de couple de rotation sur une poulie (3) et/ou qui transmet le couple de rotation de celle-ci à titre de traction au câble (2), et dont la poulie (3) comporte, dans des flancs latéraux (5) agencés en forme d'un V sur le périmètre de ladite poulie, des dents (7) disposées symétriquement, par rapport au plan de rotation de la poulie, inclinées par rapport aux lignes radiales et faisant saillie sur les flancs latéraux, dents dont les flancs (8) se coupent sur une ligne de sommet (9) caractérisé en ce que, sur le périmètre de la poulie (3), plusieurs unités dentées (6) sont agencées à distance (A) l'une de l'autre, en ce que chaque unité dentée (6) comporte plusieurs dents (7) dont les lignes de sommet (9) s'étendent à distance égale (B) sur toute leur longueur.

2. Dispositif d'entraînement funiculaire selon la revendication 1 caractérisé en ce que la longueur de la ligne de sommet (9) des dents (7) est plus courte à au moins une extrémité de l'unité dentée (6) par rapport aux deux autres.

3. Dispositif d'entraînement funiculaire selon la revendication 1 ou 2 caractérisé en ce que la ligne de sommet (9) des dents (7) est inclinée d'un angle (G) de 40° à 50° par rapport à la tangeante au fond (11) de la rainure annulaire en forme de V, au point médian de l'unité dentée (6).

4. Dispositif d'entraînement funiculaire selon l'une quelconque des revendications 1 à 3 caractérisé en ce que les lignes de sommet (9) des dents (7) sont courbées dans la direction de la périphérie.

5. Dispositif d'entraînement funiculaire selon les revendications 1 à 4 caractérisé en ce que la hauteur (H) des dents (7) décroît en direction de l'extérieur.

6. Dispositif d'entraînement funiculaire selon les revendications 1 à 5 caractérisé en ce que les lignes de sommet (9) des dents (7) sont situées dans des plans communs (C, D) dont les lignes d'intersection avec le fond (11) de la rainure annulaire en forme de V (4) divergent d'un angle (E) de 30 min. à 8°.

7. Dispositif d'entraînement funiculaire selon la revendication 6 caractérisé en ce que les plans (C, D) divergent, en direction radiale, d'un angle (F) de 5° à 40°.

8. Dispositif d'entraînement funiculaire selon la revendication 5 caractérisé en ce que les surfaces dans lesquelles sont disposées les lignes de sommet (9) sont courbées en direction radiale et dans la direction du périmètre.

9. Dispositif d'entraînement funiculaire selon l'une quelconque des revendications 1 à 8 caractérisé en ce que les dents (7) d'unités dentées (6) qui se suivent sur la périphérie sont inclinées de manière opposée.

## Claims

1. Pulley which transfers the tension in a cable (2) as a torque to a pulley disk (3) and/or transfer its torque as a tension to the cable (2), and of which the pulley disk has V-shaped side flanks (5) formed around the circumference and arranged in mirror image fashion – in relation to the plane of disk rotation – and obliquely inclined relative to the radial lines, as well as teeth (7) projecting from the side flanks, the teeth having flanks (8) which meet on a crest line (9), characterised in that a plurality of toothed sections (6) are arranged on the circumference of the pulley disk (3) at a distance (A) from one another, that each toothed section (6) has a plurality of teeth (7), of which the crest lines (9) extend equidistant with a distance (B) over their entire length.

2. Pulley according to Claim 1, characterised in that the length of the crest line (9) of the teeth (7) in shorter than the two others at least at one end of the toothed section (6).

3. Pulley according to Claim 1 or 2, characterised in that the crest lines (9) of the teeth (7) are inclined at an angle (G) of 40° to 50° to the tangent at the base (11) of the V-shaped groove in the middle of the toothed section (6).

4. Pulley according to one of the Claims 1 to 3, characterised in that the crest lines (9) of the teeth (7) are curved in the circumferential direction.

5. Pulley according to one of the Claims 1 to 4, characterised in that the height (H) of the teeth (7) reduces towards the outside.

6. Pulley according to one of the Claims 1 to 5, characterised in that the crest lines (9) of the teeth (7) lie on common planes (C, D) the cut lines of which with the base (11) of the V-shaped anular groove (4) diverge by an angle (E) of 30 minutes up to 8°.

7. Pulley according to Claim 6, characterised in that the claims (C, D) diverge in the radial direction by an angle (F) of 5° to 40°.

8. Pulley according to Claim 5, characterised in that the surfaces in which the crest lines (9) lie are curved in radial and in circumferential directions.

9. Pulley according to one of the Claims 1 to 8, characterised in that the teeth (7) of toothed sections (6) arranged sequentially in the circumferential direction are oppositely inclined.

Fig.1

Fig.2

Fig.6

Fig.3

Fig. 4

Fig.5

Fig.7

Fig.8

Fig.9

Fig.10

Fig.11

Fig.12

Fig.13

Fig.14

Fig.15

Fig.18

Fig.17

Fig.16

EP 0 185 743 B1